# EUROPEAN PATENT APPLICATION

(11) **EP 3 301 942 A1**
(43) Date of publication of application: **04.04.2018**
(21) Application number: 16191636.6
(22) Date of filing: 30.09.2016
(51) Int. Cl.: H04N 21/44, H04N 21/6543

(54) **A METHOD AND A SYSTEM FOR DELIVERING AN OTT ADVERTISEMENT CONTENT FOR TELEVISION CONTENT DELIVERED USING A CONSTANT BIT RATE NETWORK**

(71) Applicant: Advanced Digital Broadcast S.A., 1292 Chambesy (CH)
(72) Inventor: Lipczynski, Jacek, 65-119 Zielona Gora (PL)
(74) Representative: Kancelaria Eupatent.pl Sp. z.o.o

(57) **Abstract**

A method for receiving an over-the-top (OTT) advertisement content for television content delivered using a constant bit rate network, in a customer premises equipment (CPE), the method comprising the steps of: receiving the television content over a first media delivery path which is a constant bit rate network infrastructure (130); receiving (308) the OTT advertisement content from an advertisement content source (124) over a second media delivery path which is a content delivery network (220) accessible over an Internet Protocol (IP) network infrastructure (210); and analysing (302) the incoming television content to detect a cue tone for an advertising command and in case the advertising command is a 'start' command (304), displaying (310) the received OTT advertisement content.

## Description

### TECHNICAL FIELD

A method and a system for delivering an over-the top (OTT) advertisement content for television content delivered using a constant bit rate network.

### BACKGROUND

Typically, television programming is delivered by means of a cable television system utilizing one of Digital Video Broadcasting (DVB) standards - DVB-S/S2/C/C2/T/T2. The DVB standards utilize a QAM (Quadrature Amplitude Modulation) or QPSK (Quadrature Phase Shift Keying) modulation infrastructure for transferring data which have a constant bit rate and a push mode which means the content is constantly available from a source either as ready to broadcast files (e.g. clips) or is received from some other providers in a broadcast mode as well, regardless on the amount subscribers watching the program. Typically, in the DVB standard, an audio and video content is coded and sent in a MPEG-2 or MPEG-4 compression system.

Nowadays advertisement is an integral part of programming delivered to subscribers as a broadcast or an on-demand television content. There are defined, within the programming signal, periods of time when advertisements shall be present. A signalling definition, i.e. advertisement presentation blocks definition, bases on SCTE-35 (ANSI/SCTE 35 2013) and SCTE-104 (ANSI/SCTE 104 2012) standards that respectively describe the inline insertion of cue tones in MPEG-TS streams and translate communications between the automation and compression points of the system that inserts the SCTE 35 sections. A broadcast television content is delivered to a CPE (Customer Premises Equipment) device using operator's media delivery path i.e. according to DVB-S/S2/C/T/T2 or IP (Internet Protocol) standards. The advertisement is delivered in blocks in order to facilitate authoring advertisement clips into segments. Currently known solutions allow content source providers to embed their own advertisement blocks including signalling of those blocks definition. A mutual agreement between an operator and a local content provider is defined by a contract, wherein the advertisement blocks can be locally replaced by broadcast affiliates. For example, BBC or Euro-Sport channels are available at most European countries, hence providing dedicated country tailored advertisements. However in such type of broadcasting (DVB), advertisement content embedded in the stream is uniform for all subscribers group, therefore it cannot be targeted towards individual watchers.

Over-the-top television (OTT) is gaining in popularity as an alternative in television broadcasting. It provides television programs, which are offered by stationary broadcasters (such as cable television), over the Internet. In some cases part of a programming content is available only in the OTT form - for example due to lack of satellite broadcast of specific channels in a given region. Moreover, the OTT may provide an advertisement content which is tailored to a specific group of subscribers or individual subscribers basing on their preferences.

Therefore, there is a need to provide a method and a system for delivering a tailored advertisement content in a form of an over-the-top television content wherein a programming content is delivered using a constant bit rate network, such as defined by DVB standards.

### SUMMARY

There is disclosed a method for receiving an over-the-top advertisement content for television content delivered using a constant bit rate network, in a customer premises equipment, the method comprising the steps of: receiving the television content over a first media delivery path which is a constant bit rate network infrastructure; receiving the OTT advertisement content from an advertisement content source over a second media delivery path which is a content delivery network accessible over an Internet Protocol (IP) network infrastructure; and analysing the incoming television content to detect a cue tone for an advertising command and in case the advertising command is a 'start' command, displaying the received OTT advertisement content.

The method may further comprise determining a subscriber profile of the CPE and receiving the OTT advertisement content depending on the subscriber profile parameters.

The OTT advertisement content and the television content can be synchronized according to the ANSI/SCTE 35 2013 time signalling.

There is also disclosed a non-transitory computer readable storage medium comprising instructions that, when executed by a computer, enable delivering an over-the-top content in a constant bit rate television network in accordance with the method as disclosed herein.

There is also disclosed a system for delivering an over-the-top advertisement content for television content delivered using a constant bit rate network, to a customer premises equipment, the system comprising: a head-end configured to deliver the television content over a first media delivery path which is a constant bit rate network infrastructure; a content delivery network configured to deliver the OTT advertisement content from an advertisement content source over a second media delivery path accessible over an Internet Protocol (IP) network infrastructure.

The system may further comprise a customer premises equipment connected to the constant bit rate network infrastructure for receiving the television content and to the Internet Protocol (IP) network infrastructure for receiving the OTT advertisement content.

### BRIEF DESCRIPTION OF DRAWINGS

Further details and features of the present invention, its nature and various advantages will become more apparent from the following detailed description of the preferred embodiments shown in drawings, in which:
- Fig. 1: presents a prior art transmission system structure;
- Fig. 2: presents a new transmission system structure;
- Fig. 3: presents a flowchart of data processing.

### DETAILED DESCRIPTION

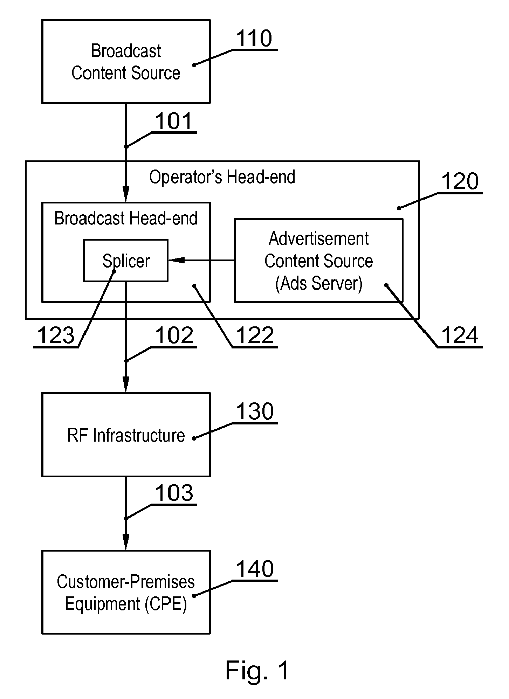

Fig. 1 presents a prior art transmission system structure, the system being capable of providing advertisement content by means of delivering an SCTE-35/104 signalling to local head-end premises. Typical, the television broadcast system utilizes a broadcast content source 110 that typically consists of satellite and terrestrial reception blocks responsible for receiving signal, deciphering, if applicable, and de-multiplexing it. Such signal is delivered via a transmission channel 101 to an operator's head-end (a master facility for receiving television signals for processing and distribution over a cable television system) 120. In particular, the signal is delivered to a broadcast head-end 122 (being a part of the operator's head-end 120) where the operator may transcode the received signals and multiplex them according to local needs. Finally the signal is modulated in order to be delivered via a transmission channel 102 to a Radio Frequency (RF) infrastructure 130 that connects, via a transmission channel 103, the head-end and Customer Premises Equipment (CPE) 140 located at subscribers' homes. The broadcast head-end 122 additionally comprises an audio-video signal splicer 123 that is responsible for seamless replacing of the broadcast signal with the advertisement signal provided by an advertisement content source 124 (an advertisement server comprised within the operator's head end 120).

Another option for delivering the advertisement content to the subscribers is designed for CPE equipped with a storage e.g. a hard drive or/and flash. In this method optional advertisement clips are delivered to the CPE storage ahead of time. Next the SCTE-35/104 signalling is used by CPE software in order to replace the advertisement on the fly in an appropriate moment with predetermined clips that are already preloaded to the CPE storage.

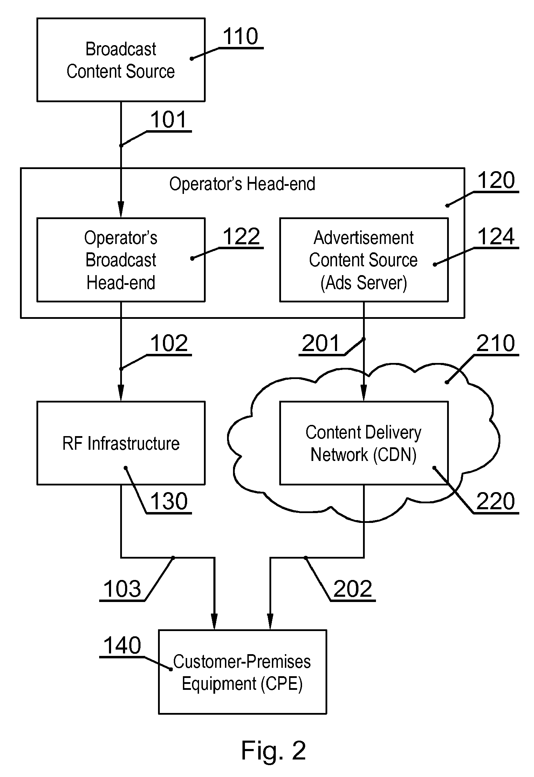

Fig. 2 presents a new transmission system structure. The system comprises a broadcast content source 110 (typically comprising satellite and terrestrial reception blocks responsible for receiving signal, deciphering, if applicable, and de-multiplexing). Next the signal is delivered via a transmission channel 101 to an operator's broadcast head-end 122 which together with an advertisement content source 124 forms an operator's head-end 120. In the operator's broadcast head-end 120, the operator may transcode the received signals, multiplex them according to local needs and cipher again using dedicated Conditional Access (CA) infrastructure. Next, the signal gets modulated in order to be delivered via a transmission channel 102 to a Radio Frequency (RF) infrastructure 130 that connects via a transmission channel 103 the head-end and Customer Premises Equipment (CPE) 140 located at subscribers' homes. The advertisement content source 124 is responsible for providing advertisement clips via a transmission channel 201 to a content delivery network (CDN) 220 that is part of an IP infrastructure 210 that is either public Internet or operator's private network. Next the advertisement content is delivered directly to the CPE 140 of a subscriber, wherein the CPE 140 is equipped with a network interface card (NIC) and has access to the Internet or the operator's network.

As a result, in the new system there are two different parallel media delivery paths for content delivery. The first path delivers programming content utilizing the DVB standards and the second path delivers advertisement content utilizing a dedicated Over-the-top service available through a content delivery network CDN 210 (Internet or the operator's network).

Therefore, it is possible to deliver the advertisement content which is tailored to individual subscriber preferences (acquired from the CPE profile that defines owners preferences - for example basing on the content which is consumed by the subscriber on that particular CPE) which enhances operator's ability by offering on demand targeted advertising.

In the aforementioned system, the SCTE-35/104 signalling is delivered to the CPE 140 in a DVB standard (broadcast), whereas the advertisement content is delivered over the network 210 using dedicated advertisement OTT (Over-The-Top) service. When utilizing two different parallel media delivery paths, a synchronization of the streams is required. The OTT transmission requires considering propagation time from the advertisement origin server(s) 124 to the CPE 140. The origin server(s) 124 that serve(s) all the advertisement assets chunks to the CPE 140 are connected through the CDN (Content Delivery Network). Depending on the CDN 220 architecture i.e. the number of nodes/hopes between the CPE 140 and the advertisement server 124, the time of delivery may vary. In order to avoid "black screen" effect on the CPE 140, a predetermined CDN cache loading mechanism is employed. The advertisement system is aware of advertisement blocks presentation window, thus it controls the CDN 220 in order to push and keep the advertisement blocks in the cache for an appropriate period of time, thus resolving CDN propagation issue. This results in fast data acquisition and seamless display on the CPE 140. The synchronization between broadcast-TV stream and the advertisement content delivered over the OTT bases on SCTE-35 time signalling.

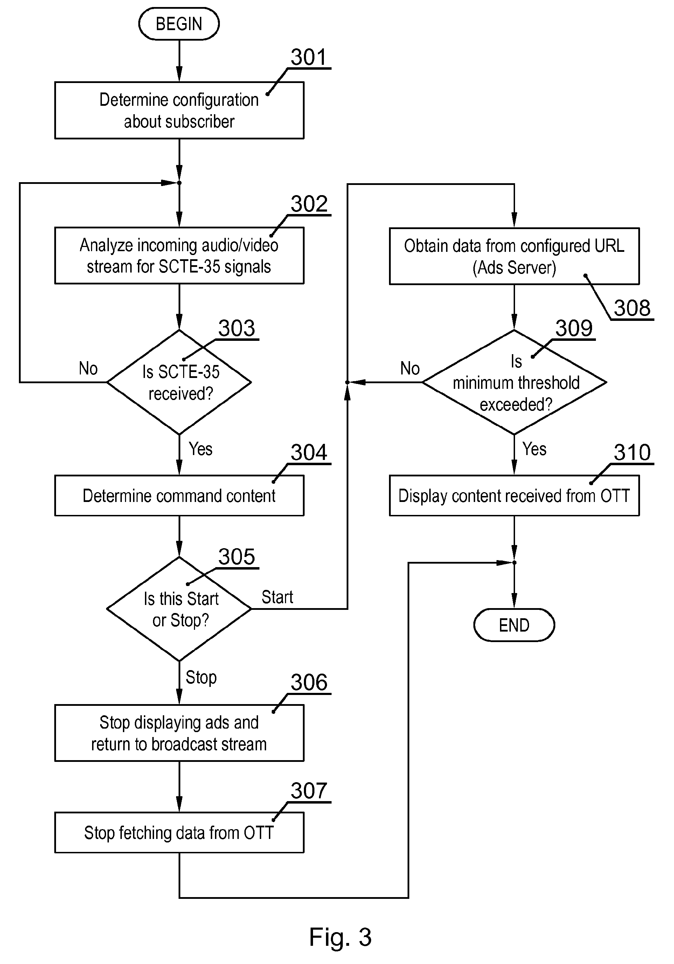

Fig. 3 presents a data processing diagram. In the first step 301, a configuration of a subscriber is determined (e.g. the subscriber profile that determines the type of advertising content interesting for that subscriber). Next, in step 302 an incoming stream is analysed towards detection of SCTE-35 signals. If the STCE-35 signals are detected in step 303, then the procedure moves to step 304, otherwise it loops back to step 302. In step 304 and 305 the type of STCE-35 command is determined. If the command is "start" the procedure moves to step 308 in which advertisement data is obtained from the configured URL (the advertisement server). The advertisement data obtained can be selected according to the configuration of the subscriber. Next in step 309 it is checked if a minimum threshold is exceeded, if not the procedure loops back to step 308 otherwise it continues to final step 310 in which the received content is displayed. The minimum threshold value depends on OTT delivery method and may vary. For example, it can be set to 3 consequent segment for HLS. If the command in step 305 is "stop" then in step 306 the advertisement displaying is terminated and the broadcast stream is displayed again. In step 307 fetching of the data from the OTT is terminated and the procedure is finished.

## Claims

1. A method for receiving an over-the-top (OTT) advertisement content for television content delivered using a constant bit rate network, in a customer premises equipment (CPE), the method comprising the steps of:
- receiving the television content over a first media delivery path which is a constant bit rate network infrastructure (130);
- receiving (308) the OTT advertisement content from an advertisement content source (124) over a second media delivery path which is a content delivery network (220) accessible over an Internet Protocol (IP) network infrastructure (210); and
- analysing (302) the incoming television content to detect a cue tone for an advertising command and in case the advertising command is a 'start' command (304), displaying (310) the received OTT advertisement content.

2. The method according to claim 1, further comprising determining (301) a subscriber profile of the CPE and receiving (308) the OTT advertisement content depending on the subscriber profile parameters.

3. The method according to any of the above claims, wherein the OTT advertisement content and the television content are synchronized according to the ANSI/SCTE 35 2013 time signalling.

4. A non-transitory computer readable storage medium comprising instructions that, when executed by a computer, enable delivering an over-the-top (OTT) content in a constant bit rate television network in accordance with the method according to any of claims 1-3.

5. A system for delivering an over-the-top (OTT) advertisement content for television content delivered using a constant bit rate network, to a customer premises equipment (CPE), the system comprising:
- a head-end (122) configured to deliver the television content over a first media delivery path which is a constant bit rate network infrastructure (130);
- a content delivery network (220) configured to deliver the OTT advertisement content from an advertisement content source (124) over a second media delivery path accessible over an Internet Protocol (IP) network infrastructure (210).

6. The system according to claim 5, further comprising a customer premises equipment (140) connected to the constant bit rate network infrastructure (130) for receiving the television content and to the Internet Protocol (IP) network infrastructure (210) for receiving the OTT advertisement content.
